# FASCICULE DE BREVET EUROPEEN

(11) **EP 0 307 780 B1**
(45) Date de publication et mention de la délivrance du brevet: **21.07.1993**
(21) Numéro de dépôt: 88114600.5
(22) Date de dépôt: 07.09.1988
(51) Int. Cl.: F16L 7/00, H02G 15/013

(54) **Joint à diamètres variables pour étanchéité entre un tube ou orifice externe et des tubes ou tiges internes**
Dichtung mit variablen Durchmessern für die Abdichtung zwischen einem äusseren Rohr und inneren Rohren oder Stangen
Sealing with variable diameters for the tightness between an external tube and internal tubes or shafts

(30) Priorité: 11.09.1987 FR 8712606
(43) Date de publication de la demande: 22.03.1989
(73) Titulaire: LE JOINT FRANCAIS, F-95870 Bezons (FR)
(72) Inventeur: Colin, Olivier, F-95100 Argenteuil (FR)
(74) Mandataire: Weinmiller, Jürgen

(56) Documents cités:
- EP-A- 0 232 180
- DE-A- 2 209 629
- US-A- 3 655 907
- US-A- 4 267 401

## Description

La présente invention concerne un ensemble d'éléments pour former un joint d'étanchéité à diamètres variables entre un tube ou orifice externe de diamètre relativement grand, mais pouvant prendre des valeurs différentes, et un nombre n compris entre deux et six de tubes ou tiges internes de diamètre plus faible, par assemblage avec ces tubes, orifices ou tiges.

La demanderesse a déjà proposé dans sa demande de brevet FR-A-2590347 du 15 novembre 1985 un joint d'étanchéité à diamètres variables pour cylindres coaxiaux prépositionnés, comprenant au moins deux rondelles coaxiales superposées en matière élastique, formées chacune d'éléments annulaires coaxiaux, de forme cylindrique et autodécoupables, dont le diamètre externe correspond sensiblement au diamètre interne du cylindre externe de plus grand diamètre, tandis que le diamètre interne correspond sensiblement au diamètre externe du cylindre interne de plus faible diamètre, ainsi que des moyens, tels que des boulons et écrous, pour serrer ces rondelles coaxiales l'une contre l'autre entre deux bagues rigides. Un perfectionnement à ce joint d'étanchéité, permettant d'assurer facilement un serrage homogène sur tout le pourtour des rondelles coaxiales, et éventuellement de limiter l'effort de serrage à une valeur maximale, a fait l'objet de la demande d'addition FR-A-2593578.

Les joints d'étanchéité des documents ci-dessus ne permettent cependant d'assurer le blocage et l'étanchéité qu'entre deux cylindres coaxiaux, par exemple entre un tube ou orifice externe et un cylindre interne, plein ou non. Or, il arrive que l'on désire faire passer à travers un tube ou orifice externe plusieurs cylindres internes, notamment plusieurs tubes internes, et on ne connaissait pas à ce jour dans ce cas de joint d'étanchéité aussi satisfaisant que ceux mentionnés ci-dessus pour un cylindre interne coaxial à un cylindre externe, en particulier lorsque l'on doit tirer des câbles à travers les tubes internes.

La présente invention a pour but de procurer un joint d'étanchéité entre un tube ou orifice externe et un nombre de tubes ou tiges internes au moins égal à deux, qui assure un excellent blocage et une bonne étanchéité et soit d'un montage facile et rapide.

L'ensemble d'éléments selon l'invention est caractérisé en ce qu'il comporte :
a) une pièce axiale en matériau élastomère, de section droite en forme générale de multilobe délimité par des arcs de cercle concaves ou d'étoile à n branches séparées par des arcs de cercle concaves, de rayon de courbure correspondant sensiblement au rayon de la surface externe des tubes ou tiges internes de faible diamètre, adaptée à être serrée entre les tubes ou tiges internes,
b) n pièces périphériques en matériau élastomère, de section droite en forme de croissant de lune, comportant deux zones concaves internes symétriques de rayon de courbure sensiblement égal au rayon de la surface externe des tubes ou tiges de faible diamètre, et une zone convexe externe, comprenant au moins une partie de forme cylindrique et autodécoupable de rayons externe et interne égaux aux rayons internes de tubes ou orifices externes de diamètres différents, lesdites pièces périphériques étant adaptées à être enserrées entre le tube ou orifice externe et les tubes ou tiges internes,
c) un premier jeu de flasques latéraux en matériau dur, de section droite correspondant à la section droite des pièces périphériques,
d) un second jeu de flasques latéraux en matériau dur, de section droite correspondant à la section droite des pièces périphériques, éventuellement complétée par la section droite du tube ou d'un rebord autour de l'orifice externe, et
e) des moyens de serrage longitudinal des pièces périphériques en matériau élastomère entre les deux jeux de flasques latéraux, les différentes pièces étant complémentaires de sorte qu'assemblées elles forment un corps cylindrique comportant n passages cylindriques parallèles de section sensiblement circulaire et destinés à recevoir les tubes ou tiges internes.

Il répond en outre de préférence à au moins l'une des caractéristiques suivantes :
- Sa pièce axiale comporte dans ses zones concaves des parties superposés autodécoupables de rayons de courbure égaux aux rayons de la surface externe de tubes ou tiges internes de diamètres différents.
- Les pièces périphériques en matériau élastomère sont subdivisées en au moins deux éléments superposés.
- Les moyens de serrage des pièces périphériques sont constitués par des boulons enfilés dans des trous traversant le second jeu de flasques latéraux et ces pièces, puis se vissant dans des trous taraudés du premier jeu de flasques latéraux.

La section droite de la pièce axiale est en forme de quadrilatère délimité par des arcs de cercle concaves lorsque les tubes ou tiges internes sont au nombre de deux.

On observera qu'il n'est pas en pratique nécessaire de munir la pièce axiale, qui est de section droite relativement faible et enserrée entre les tubes internes, de moyens de serrage.

Il est décrit ci-après, à titre d'exemple et en référence aux figures du dessin annexé, un joint d'étanchéité entre un tube externe de grand diamètre et trois tubes internes.

La figure 1 représente le joint en perspective éclatée à l'extrémité d'un tube externe, avant sa mise en place.

La figure 2 représente en élévation, le joint partiellement monté, vu de l'extrémité du tube externe.

La figure 3 représente le joint en coupe diamétrale selon l'axe III-III de la figure 2.

La figure 4 représente une pièce périphérique en caoutchouc.

La figure 5 représente un flasque latéral destiné à être appliqué sur la pièce périphérique en caoutchouc à l'intérieur du tube externe.

La figure 6 représente un flasque latéral destiné à être appliqué sur la pièce périphérique et sur la face d'extrémité du tube externe.

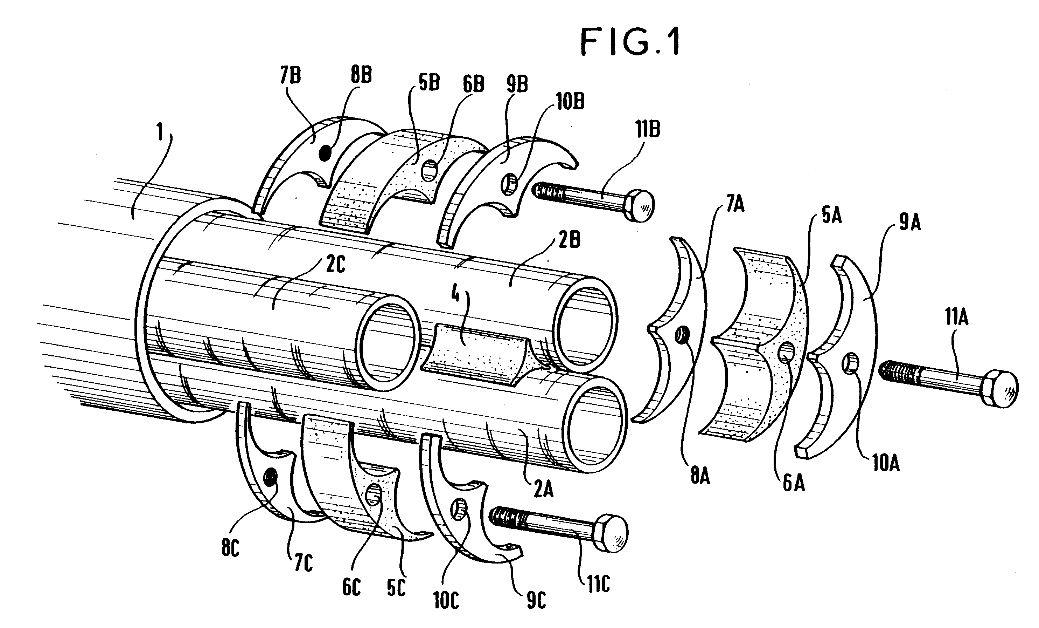

Dans la figure 1, le joint doit assurer l'étanchéité entre un tube externe 1 et trois tubes internes 2A, 2B, 2C régulièrement répartis autour de l'axe du tube 1. Le joint comprend une pièce axiale 4, en caoutchouc, de section droite en forme d'étoile à trois branches, et trois pièces périphériques 5A, 5B, 5C, également en caoutchouc, de section droite en forme de croissant de lune.

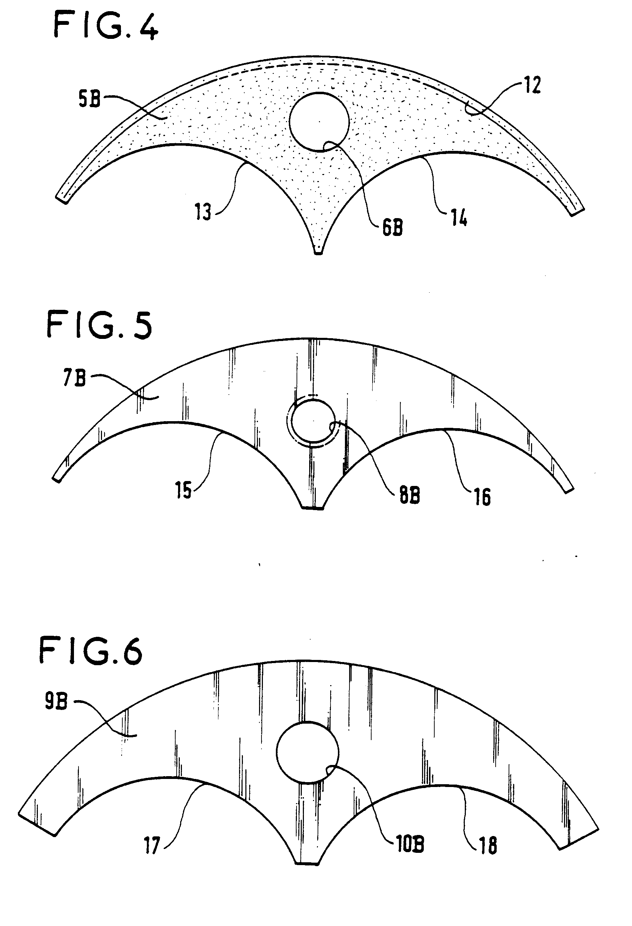

Les pièces périphériques sont munis de trous longitudinaux 6A, 6B, 6C. Ces pièces comportent une partie interne pleine, et un élément annulaire externe autodécoupable, non représenté sur cette figure, mais visible sur la figure 4.

De part et d'autre de chaque pièce périphérique en caoutchouc sont disposés des flasques internes métalliques 7A, 7B, 7C munis de trous taraudés 8A, 8B, 8C, et des flasques externes métalliques 9A, 9B, 9C, munis de trous 10A, 10B, 10C destinés à être appliqués sur l'extrémité du tube 1 ainsi que sur les pièces périphériques correspondantes.

Des boulons 11A, 11B, 11C à extrémité filetée sont destinés à être enfilés dans les trous 10A, 10B, 10C des flasques externes et dans les trous 6A, 6B, 6C des pièces périphériques en caoutchouc, et à se visser dans les trous taraudés des flasques internes 7A, 7B, 7C pour assurer le serrage des pièces périphériques 5A, 5B, 5C et par là l'étanchéité de la jonction entre les tubes.

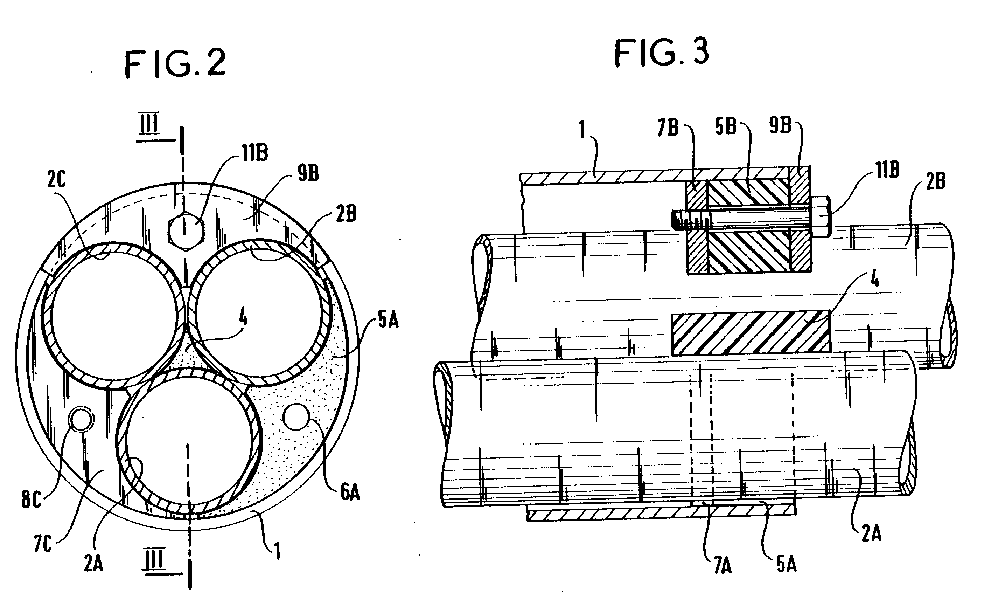

Les figures 2 et 3 représentent en élévation et en coupe diamétrale une partie des pièces du joint mises en place. Le flasque externe 9B a déjà été fixé sur la pièce périphérique 5B et sur la face d'extrémité du tube externe 1 grâce au boulon 11B, mais les autres flasques externes n'ont pas été mis en place, ainsi que la pièce périphérique 5C, et la pièce périphérique 5A et le flasque 7C sont encore visibles. Comme on le verra ci-après, la mise en place des pièces périphériques et des flasques s'effectue en fait simultanément. La pièce axiale 4 est de préférence d'une longueur supérieure à celle des pièces périphériques.

La figure 4 représente une pièce périphérique en caoutchouc 5B. Celle-ci est percé du trou longitudinal 6B de passage du boulon de serrage, et comporte un élément annulaire externe autodécoupable 12. Son côté interne comporte deux zones concaves 13, 14 de rayon de courbure correspondant sensiblement au rayon des tubes internes. Elle est muni dans un secteur central d'une entaille laissant subsister une mince épaisseur de matière (partie représentée en trait interrompu), et de part et d'autre d'entailles d'étendant sur toute sa hauteur, de façon à permettre de retirer par déchirement une zone périphérique pour adapter la pièce à un tube externe de diamètre plus faible.

La figure 5 représente un flasque interne 7B, muni de son trou taraudé 8B de réception du boulon de serrage. Il comporte également de son côté tourné vers l'axe du tube externe deux zones concaves 15, 16 de rayon de courbure correspondant sensiblement au rayon des tubes internes.

Le flasque externe 9B représenté en figure 6 est percé d'un trou 10B de passage du boulon de serrage, et son côté tourné vers l'axe du tube interne présente deux zones concaves 17, 18 destinées à recevoir les tubes internes, et de rayon de courbure correspondant sensiblement au rayon de ceux-ci.

Le montage du joint s'effectue comme suit. On assemble les pièces périphériques 5A, 5B, 5C avec leurs flasques internes 7A, 7B, 7C et externes 9A, 9B, 9C en enfilant dans les trous longitudinaux des flasques externes et des pièces périphériques les vis 11A, 11B, 11C et en les vissant à la main dans les trous tandis taraudés des flasques internes. On introduit les trois ensembles constitués par ces pièces dans le tube externe 1 et autour des tubes internes 2A, 2B, 2C. On introduit la pièce axiale 4 entre les trois tubes internes. On visse alternativement et successivement de quelques filets les trois vis 11A, 11B, 11C pour assurer un serrage équilibré des pièces périphériques et de la pièce axiale. On se fixe de préférence une valeur limite pour le couple de serrage final pour assurer le degré d'étanchéité désiré, ou on limite le serrage par la longueur du filetage des vis.

Bien entendu, le dispositif de l'invention peut être adapté à un nombre de tubes ou tiges internes supérieur à 3, le nombre de pièces périphériques étant alors égal au nombre de tubes ou tiges internes.

## Revendications

1. Ensemble d'éléments pour former un joint d'étanchéité à diamètres variables entre un tube ou orifice externe (1) de diamètre relativement grand, mais pouvant prendre des valeurs différentes, et un nombre n compris entre deux et six de tubes ou tiges internes (2A, 2B, 2C) de diamètre plus faible,
comportant
a) une pièce axiale (4) en matériau élastomère, de section droite en forme de quadrilobe délimité par des arcs de cercle concaves ou d'étoile à n branches séparées par des arcs de cercle concaves, de rayon de courbure correspondant sensiblement au rayon de la surface externe des tubes ou tiges internes de faible diamètre, adaptée à être enserrée entre les tubes ou tiges internes,
b) n pièces périphériques (5A, 5B, 5C) en matériau élastomère, de section droite en forme de croissant de lune, comportant deux zones concaves internes symétriques (13, 14) de rayon de courbure sensiblement égal au rayon de la surface externe des tubes ou tiges de faible diamètre, et une zone convexe externe, comprenant au moins une partie de forme cylindrique et autodécoupable (12) de rayons externe et interne égaux aux rayons internes de tubes ou orifices externes (1) de diamètres différents, lesdites pièces périphériques étant adaptées à être enserrées entre le tube ou orifice externe et les tubes ou tiges internes,
c) un premier jeu de flasques latéraux en matériau dur (7A, 7B, 7C) de section droite correspondant à la section droite des pièces périphériques,
d) un second jeu de flasques latéraux en matériau dur (9A, 9B, 9C) de section droite correspondant à la section droite des pièces périphériques, éventuellement complétée par la section droite du tube ou d'un rebord autour de l'orifice externe,
et
e) des moyens (11A, 11B, 11C) de serrage longitudinal des pièces périphériques en matériau élastomère entre les deux jeux de flasques latéraux, les différentes pièces étant complémentaires de sorte qu'assemblées elles forment un corps cylindrique comportant n passages cylindriques parallèles de section sensiblement circulaire et destinés à recevoir les tubes ou tiges internes.

2. Ensemble d'éléments selon la revendication 1, dans lequel le nombre n est égal à 2, caractérisé en ce que la pièce axiale est en forme de quadrilobe délimité par des arcs de cercle concaves.

3. Ensemble d'éléments selon la revendication 1, dans lequel le nombre n est compris entre 3 et 6, caractérisé en ce que la pièce axiale est en forme d'étoile à n branches séparées par des arcs de cercle concaves.

4. Ensemble d'éléments selon l'une des revendications 1 à 3, caractérisé en ce que sa pièce axiale (4) comporte dans ses zones concaves des parties autodécoupables de rayons de courbure égaux aux rayons de la surface externe de tubes ou tiges internes de diamètres différents.

5. Ensemble d'éléments selon l'une des revendications 1 à 4, caractérisé en ce que les pièces périphériques en matériau élastomère (5A, 5B, 5C) sont subdivisées en au moins deux éléments superposés.

6. Ensemble d'éléments selon l'une des revendications 1 à 5, caractérisé en ce que les moyens de serrage des pièces périphériques sont constitués par des boulons (11A, 11B, 11C) enfilés dans des trous (10A, 10B, 10C ; 6A, 6B, 6C) traversant le second jeu de flasques latéraux et ces pièces, puis se vissant dans des trous taraudés (8A, 8B, 8C) du premier jeu de flasques latéraux.

## Claims

1. Set of elements for forming a variable diameter seal between an outside tube or orifice (1) of varying relatively large diameter and a number n between two and six inside tubes or rods (2A, 2B, 2C) of relatively small diameter,
comprising
a) an elastomer material axial part (4) with a four-lobed right cross-section delimited by concave circular arcs or an n-pointed star-shaped cross-section whose branches are separated by concave circular arcs whose radius of curvature is substantially equal to the radius of the outside surface of the relatively small diameter inside tubes or rods, adapted to be gripped between the inside tubes or rods,
b) n elastomer material peripheral parts (5A, 5B, 5C) having a crescent moon-shaped right cross-section and comprising two symmetrical internal concave areas (13, 14) whose radius of curvature is substantially equal to the radius of the outside surface of the relatively small diameter tubes or rods and an external convex area comprising at least one cylindrical shape and self-cutting part (12) with outside and inside radii equal to the inside radii of the different diameter external tubes or orifices (1), said peripheral parts being adapted to be gripped between the outside tube or orifice and the inside tubes or rods,
c) a first set of hard material lateral flanges (7A, 7B, 7C) whose right cross-section corresponds to the right cross-section of the peripheral parts,
d) a second set of hard material lateral flanges (9A, 98, 9C) whose right cross-section corresponds to the right cross-section of the peripheral parts, possibly completed by the right cross-section of the tube or a lip around the external orifice, and
e) longitudinal clamping means (11A, 11B, 11C) for the peripheral parts in an elastomer material between the two sets of lateral flanges, the various parts being complementary so that when assembled together they form a cylindrical body comprising n cylindrical passages which are parallel and of substantially circular cross-section so that they are adapted to receive inside tubes or rods.

2. Set of elements according to claim 1 wherein the number n is equal to two and characterised in that the axial part has a quadri-lobe shaped delimited by concave circular arcs.

3. Set of elements according to claim 1 wherein the number n is between three and six and characterised in that the axial part is star-shaped with n branches separated by concave circular arcs.

4. Set of elements according to any one of claims 1 to 3 characterised in that its axial part (4) comprises in its concave areas self-cutting parts with radius of curvature equal to the radius of the outside surface of different diameter inside tubes or rods.

5. Set of elements according to any one of claims 1 to 4 characterised in that the elastomer material peripheral parts (5A, 5B, 5C) are subdivided into at least two stacked elements.

6. Set of elements according to any one of claims 1 to 5 characterised in that the means for clamping the peripheral parts comprise bolts (11A, 11B, 11C) threaded into holes (10A, 10B, 10C; 6A, 6B, 6C) passing through the second set of lateral flanges and said parts before they screw into the screwthreaded holes (8A, 8B, 8C) of the first set of lateral flanges.

## Patentansprüche

1. Gruppe von Elementen, die eine Dichtung mit variablen Durchmessern zwischen einem Außenrohr oder einer AußenÖffnung (1) verhältnismäßig großen Durchmessers, der auch noch variabel sein kann, und einer Anzahl n von zwischen zwei und sechs Innenrohren oder Innenstäben (2A, 2B, 2C), geringeren Durchmessers bilden, wobei diese Gruppe aufweist:
a) ein axiales Element (4) aus Elastomermaterial, dessen Querschnitt vierblättrig ist und durch konkave Kreisbögen begrenzt ist oder auch die Form eines n-zackigen Sterns besitzt, dessen Zacken durch konkave Kreisbögen miteinander verbunden sind, wobei der Krümmungsradius der Kreisbögen im wesentlichen dem Radius der Außenoberfläche der Innenrohre oder -stäbe kleinen Durchmessers entspricht und wobei dieses Element zwischen den Innenrohren oder -stäben eingeklemmt werden soll,
b) n periphere Elemente (5A, 5B, 5C) aus Elastomermaterial mit einem mondsichelförmigen Querschnitt, der zwei symmetrische konkave Innenzonen (13, 14) mit einem Krümmungsradius gleich dem der Außenoberfläche der Rohre oder Stäbe geringen Durchmessers und eine konvexe Außenzone besitzt, die mindestens einen Bereich zylindrischer Form aufweist, der abreißbar ist (12), wobei dessen Außenradius und Innenradius gleich dem Innenradien von Außenröhren oder Öffnungen (1) unterschiedlicher Durchmesser gewählt sind und wobei die peripheren Elemente zwischen dem Außenrohr bzw. der Außenöffnung und den Innenrohren bzw. Innenstäben eingeklemmt werden sollen,
c) einen ersten Satz von Seitenflanschen aus hartem Material (7A, 7B, 7C), deren Querschnitt dem Querschnitt der peripheren Elemente entspricht,
d) einen zweiten Satz von Seitenflanschen aus hartem Material (9A, 9B, 9C), deren Querschnitt dem Querschnitt der peripheren Elemente entspricht, gegebenenfalls ergänzt um den Querschnitt des Rohrs oder einen Rand um die Außenöffnung herum, und
e) Mittel (11A, 11B, 11C) zum Längsverspannen der peripheren Elemente aus Elastomermaterial zwischen den beiden Sätzen von Seitenflanschen, wobei die verschiedenen Elemente komplementär sind, sodaß sie in montierter Form einen zylindrischen Körper bilden, der n parallele zylindrische Durchlässe von im wesentlichen kreisförmigem Querschnitt aufweist, durch die die Innenrohre oder Innenstäbe verlaufen.

2. Gruppe von Elementen nach Anspruch 1, bei der die Zahl n den Wert 2 annimmt, dadurch gekennzeichnet, daß das axiale Element eine vierblättrige Form besitzt und die Seiten durch konkave Kreisbögen begrenzt sind.

3. Gruppe von Elementen nach Anspruch 1, bei der die Zahl n zwischen drei und sechs liegt, dadurch gekennzeichnet, daß das axiale Element die Form eines n-zackigen Sterns besitzt, wobei die Zacken durch konkave Kreisbögen miteinander verbunden sind.

4. Gruppe von Elementen nach einem der Ansprüche 1 bis 3, dadurch gekennzeichnet, daß das axiale Element (4) in seinen konkaven Zonen abreißbare Bereiche besitzt, deren Krümmungsradien den Krümmungsradien der Außenoberfläche von Innenrohren oder -stäben unterschiedlicher Durchmesser gleichen.

5. Gruppe von Elementen nach einem der Ansprüche 1 bis 4, dadurch gekennzeichnet, daß die peripheren Elemente aus Elastomermaterial (5A, 5B, 5C) in mindestens zwei übereinandergelagerte Elemente unterteilt sind.

6. Gruppe von Elementen nach einem der Ansprüche 1 bis 5, dadurch gekennzeichnet, daß die Spannmittel der peripheren Elemente aus Bolzen (11A, 11B, 11C) bestehen, die in den zweiten Satz von seitlichen Flanschen und diese Elemente durchquerende Löcher (10A, 10B, 10C ; 6A, 6B, 6C) gesteckt sind und dann in Gewindelöcher (8A, 8B, 8C) des ersten Satzes von Seitenflanschen eingeschraubt werden.
